# EUROPEAN PATENT APPLICATION

(11) **EP 1 036 501 A2**
(43) Date of publication of application: **20.09.2000**
(21) Application number: 00302002.1
(22) Date of filing: 13.03.2000
(51) Int. Cl.: A21D 13/08

(54) **Low moisture cheesecake product**

(30) Priority: 15.03.1999 US 268177
(71) Applicant: KRAFT FOODS, INC., Northfield, Illinois 60093 (US)
(72) Inventor: Rapaport, Lauren Elyse, Lake Zurich, Illinois 60047 (US)
(74) Representative: Eyles, Christopher Thomas

(57) **Abstract**

The present invention provides a low moisture cheesecake product having extended shelf life stability. It includes a crust whose water activity ranges from about 0.40 to about 0.86, and a cheesecake filling whose water activity ranges from about 0.76 to about 0.86. The water activity of the finished cheesecake product ranges from about 0.60 to about 0.86. The shelf life stability of the cheesecake product is at least about 3 months at refrigerated temperature. In favorable embodiments of the cheesecake product, its size and shape are appropriate for an individual serving as a snack or a dessert. The filling comprises less than about 60% by weight cream cheese, and includes ingredients that contribute to a lowering of the water activity of the cheesecake product.

## Description

### FIELD OF THE INVENTION

This invention relates to a cheesecake product having low moisture content that is stable for extended periods at refrigerated temperatures. In an important aspect of the invention, the cheesecake product is a small bar suitable for an individual serving.

### BACKGROUND OF THE INVENTION

Prepackaged cheesecake products are known in the field of dairy product confections, and are sold as grocery products with wide distribution. Commonly these cheesecake products are sold in a generally rigid container (i.e., a box with an aluminum pie tin) which helps to retain the overall shape and integrity of the cheesecake. Such cheesecakes commonly have a crust providing a bottom to the cheesecake product, and a filling based on a high proportion of cream cheese placed on top of the crust. In many cases the crust may be a crumb crust, such as a graham cracker or graham flour based crust. When freshly prepared the crusts in general are crisp and crunchy, which contributes to the overall gustatory appeal of the cheesecake product. The cheesecake filling, however, generally has a relatively high moisture content. Thus, during storage, moisture from the filling can migrate into the crust and make it soggy. This loss of crispness in the crust detracts from the overall sensory appeal, and hence the marketability, of the cheesecake product.

Conventional cheesecake products have poor shelf life stability at refrigerated temperatures. They commonly retain a relatively high level of moisture in the cheesecake filling, wherein the water activity may be as high as 0.95, or even higher. The moisture, in conjunction with the nutrients present in the cheesecake product, provide a viable environment for microorganisms present to flourish.

The cheesecake products generally available at the present time are large scale products weighing, for example, in the range of 1 lb (0.45 kg) to 2 lbs (0.91 kg) or higher, and are intended to provide several individual "pie-slice shaped", or sector shaped, servings. The servings are intended to be eaten with an eating utensil such as a fork, since, in general, the cheesecake products, as noted above, have a crust only on the bottom, with the rest being a cheesecake filling exposed to view and potential contact. Therefore, eating such pie-slice shaped servings by the fingers would be messy. Thus, such cheesecake products are generally not suitable for sale as individual servings (e.g., cheesecake snack bars).

In view of the problems related above, there remains a need for a cheesecake product having an extended shelf life stability at refrigerated temperature, lasting three to four months or more. There is further a need for a cheesecake product suitable for individual servings, such as, for example, an individual serving of a cheesecake snack. There is additionally a need for a cheesecake snack designed to be eaten with the fingers without being messy. The present invention provides a cheesecake product that meets these needs.

### SUMMARY OF THE INVENTION

The present invention provides a low moisture cheesecake product having extended shelf life stability. It includes a crust whose water activity ranges from about 0.40 to about 0.86 and a cheesecake filling whose water activity ranges from about 0.76 to about 0.86. The water activity of the finished cheesecake product ranges from about 0.60 to about 0.86. The proportion of the crust to the cheesecake filling ranges from about 10:90 to about 30:70 by weight, preferably about 15:85 to about 25:75 by weight, and most preferably about 20:80 by weight. In advantageous embodiments of the cheesecake product, the water activity of the crust is about 0.40 to about 0.86, preferably 0.50 to about 0.80, and most preferably about 0.60 to about 0.70. Additionally, important embodiments provide the cheesecake product of the invention in which the water activity of the cheesecake filling is about 0.6 to about 0.86, more preferably about 0.7 to about 0.85, and most preferably about 0.75 to about 0.80. The overall water activity of the finished cheesecake product after baking is about 0.60 to about 0.85, and preferably about 0.72 to about 0.85. Preferably the water activities of both the crust and filling are approximately equal so that water migration is minimized.

The cheesecake product may also include a flavored cheesecake stuffing (e.g., fruit filling) whose water activity is less than the water activity of the cheesecake filling. Importantly, the shelf life stability of the cheesecake product is at least about 3 months at refrigerated temperature. In additional favorable embodiments of the cheesecake product, its size and shape are appropriate for an individual serving as a snack or a dessert, and in a further favorable embodimerit the crust surrounds the cheesecake filling. The crust may completely or partially (e.g., the bottom and side surfaces) surround the filing. Additionally, the crust may be located only on the bottom; in such cases, however, it is generally preferred that the crust forms a "lip" or portion extending past the filling so that the bar can be picked up and eaten with the fingers without touching the filling. In yet another advantageous embodiment, the cheesecake filling comprises less than about 60% by weight cream cheese. In an important embodiment, the cheesecake product includes ingredients that contribute to a lowering of the water activity of the cheesecake product; in particular embodiments these ingredients include dried sweet cream powder, a starch, a polyhydric alcohol, a sugar alcohol, a shortening, a fat, and an emulsifier.

### BRIEF DESCRIPTION OF THE DRAWING

Figure 1 provides a process flow diagram illustrating the preparation of one embodiment of the cheesecake product of the invention.
Figure 2 illustrates especially preferred forms of the cheesecake bars of this invention. Figure 2A illustrates a cheesecake bar with icing on the top. Figure 2B illustrates a cheesecake bar having a fruit or other flavoring component.

### DETAILED DESCRIPTION OF THE INVENTION

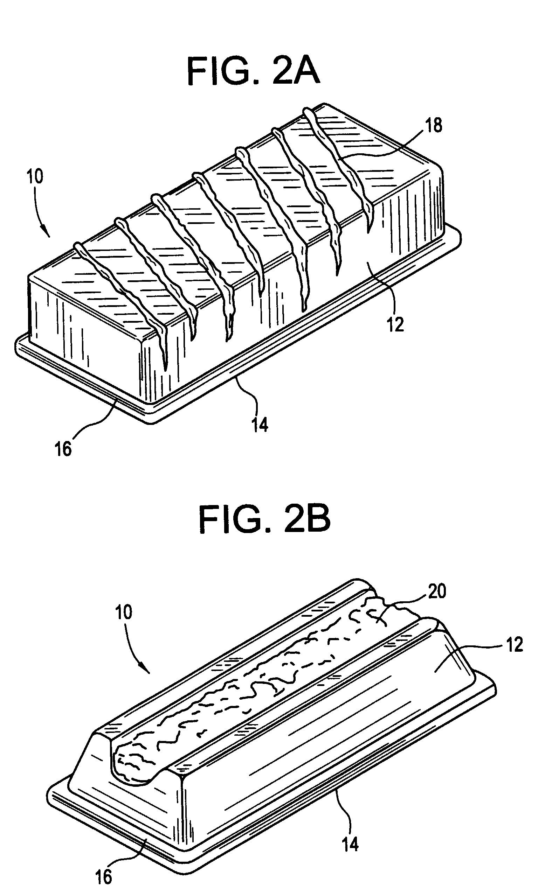

The present invention relates to a low moisture cheesecake product having extended shelf life stability at refrigerated temperature. An advantageous embodiment of the invention relates to a cheesecake product that is suitable as an individual cheesecake snack, which has the crust partially or completely surrounding the cheesecake filling. Especially preferred embodiments are shown in Figures 2A and 2B where the crust is not only on the bottom but extends past the filling to provide a means for picking up the cheesecake bar using the fingers without touching the filling.

According to the invention, the cheesecake product may also be a hand-held cheesecake snack, composed at least of a cheesecake filling enrobed in a crust. Additional components may optionally be included, such as fruit purees, chocolates, icings, and the like. The terms "crust" or "cheesecake crust" and the terms "dough" or "cheesecake dough" are used herein interchangeably to refer to the flour-containing component of the cheesecake product. In general, however, "crust" will be used to describe a partially or fully baked flour-containing component and "dough" will be used to describe the unbaked flour-containing component. The various crusts and doughs disclosed herein generally provide cheesecake products that are considered equivalent for the purposes of this invention.

Moisture content is readily measured as the percent of water in a product relative to its total weight. In the physical chemistry of food products, however, the moisture content is more appropriately provided by the thermodynamic activity of water, or water activity, which is designated herein as a_{w}. The value of thermodynamic parameter a_{w} ranges from 0 (i.e., no water available for exchange with an external phase) to 1 (i.e., water is the only component present in a phase and is fully available for exchange with an external phase). Thus a_{w} provides a measure of the extent to which any water present in a phase behaves as bulk water and is available for transfer or exchange with an external phase. In general, the moisture content expressed as a fraction or percent and the value of a_{w} are not linearly related. The value of a_{w} may be determined in ways widely known in the food sciences. In general, it may be provided by determining the partial pressure of water vapor above a phase or system under study, divided by the vapor pressure of pure water under the same conditions. Practically, it may be determined in an instrument such as AquaLab Model CX-2 (Pullman, Wa.).

Stability against microbiological contamination is achieved in the present invention by lowering the overall value of a_{w} for the finished cheesecake product to a range of about 0.60 to about 0.86. Preferably the value of a_{w} for the cheesecake product is in a range of about 0.76 to about 0.82, and still more preferably in a range of about 0.78 to about 0.80. Under these circumstances the inventors found that growth of microbiological contaminants is inhibited, so that the shelf life stability is prolonged. In favorable conditions, upon providing the cheesecake products that include the crust and cheesecake fillings of the present invention, the shelf life under commonly used refrigeration conditions can be prolonged to about 3 months or longer. Commonly used refrigerator temperatures may range, for example, from about 38°F (3.33°C) to about 55°F (12.78°C), and more commonly, may range from about 40°F (4.44°C) to about 45°F (7.22°C).

Low values of a_{w} in a cheesecake product may be attained in a number of ways. Simply lowering the a_{w} in a cheesecake product without attention to the overall product characteristics may provide a product with undesirable taste, texture and gustatory appeal for the consumer. The inventors have provided herein a cheesecake product that unexpectedly has sufficiently low values of a_{w} to provide an extended shelf life while maintaining a pleasing gustatory sensation.

Moisture migration occurs in cheesecake products until equilibration has been attained. In the cheesecake product of the present invention, moisture migration between the components is managed, resulting in a high organoleptic quality, minimization of color bleed in cases where an additional component, such as a flavor stuffing or component that may have leakable colors in it, is introduced within the cheesecake filling, and also minimizes flavor migration. Ease of manufacture is also provided by the formulations incorporated into the cheesecake crust, filling, and, optionally, stuffing and/or icing. This is attained in the instant invention by maintaining the value of a_{w} between about 0.78 and 0.82 in the cheesecake product. The crust was developed to have a water activity which is as close as possible to that of the cheesecake filling in order to minimize moisture transfer between the crust and the filing and provide a multi-textured eating experience (i.e., minimize soggy crusts).

A stuffing, such as a fruit stuffing, was developed to have a minimum a_{w} of about 0.65 and a maximum a_{w} of about 0.70 to promote moisture transfer from the cheesecake filling to the fruit stuffing, thus avoiding color bleed and the possibility of flavor contamination migrating into the cheesecake filling.

Extensive experimentation provided cheesecake filling compositions that satisfied the criteria of low water activity, agreeable gustatory sensation, and stability to microbiological contamination. Components that may be added to achieve a lowering of the water activity include, by way of nonlimiting example, dried sweet cream powder, fat mimetic starches, cold water swelling starches, a polyhydric alcohol such as glycerine, a sugar alcohol such as maltitol or glucitol, and emulsified vegetable shortening. The vegetable shortening has a relatively low melting point. Emulsifiers that may be used include by way of nonlimiting example, monoglycerides, diglycerides and polysorbates. Furthermore, the cream cheese content in the filling should be below about 60%, and in advantageous embodiments should be about 40% or lower, since cream cheese contributes significantly to the moisture content of the final cheesecake filling that is formulated.

Cheesecake products in the form of snack bars may be prepared, for example, using modified extrusion equipment to include about 20% crust and about 80% cheesecake filling. This product successfully retains its size and shape during baking, without leaking or spreading excessively. In general, the proportion of the crust to the cheesecake filling ranges from about 10:90 by weight to about 30:70 by weight, preferably about 15:85 to about 25:75 by weight, and most preferably about 20:80 by weight.

An additional embodiment of the cheesecake product is obtained by carefully regulating heating and baking steps in such a way as to arrive at the desired value of a_{w}. In this embodiment, the cheesecake filling includes a cream cheese component, or a cream cheese analog, sweeteners, and other optional components such as egg components, glycerine, edible acids, flavorings, and the like. The crust may contain any of a variety of flours, shortening agents, sweeteners, and other optional components such as leavening agents, flavorings, and the like.

The fruit or other favorable stuffings which can be employed in the present invention generally posses a soft, moist texture, and do not flow when stored for 120 days at a variety of temperatures. To attain these attributes, the fruit or other stuffings should have a value of a_{w} of about 0.7 or less. This prevents color bleed, flavor bleed, messiness and preserves a favorable mouthfeel. Fruit stuffings that may be used include, by way of nonlimiting example, strawberry fruit stuffing and white chocolate raspberry stuffing. Other stuffings include, by way of nonlimiting example, chocolate, caramel, and the like. Such stuffings may generally be employed up to about 15% of the total weight of the cheesecake product. A finished cheesecake product incorporating a fruit stuffing preferably has an a_{w} of about 0.77 to about 0.78. Fruit or other stuffings are preferably contained in a trough or depression running the length of the cheesecake bar as illustrated in Figure 2. Alternatively, the fruit or other stuffing (e.g., chocolate chips) may be distributed throughout the filling.

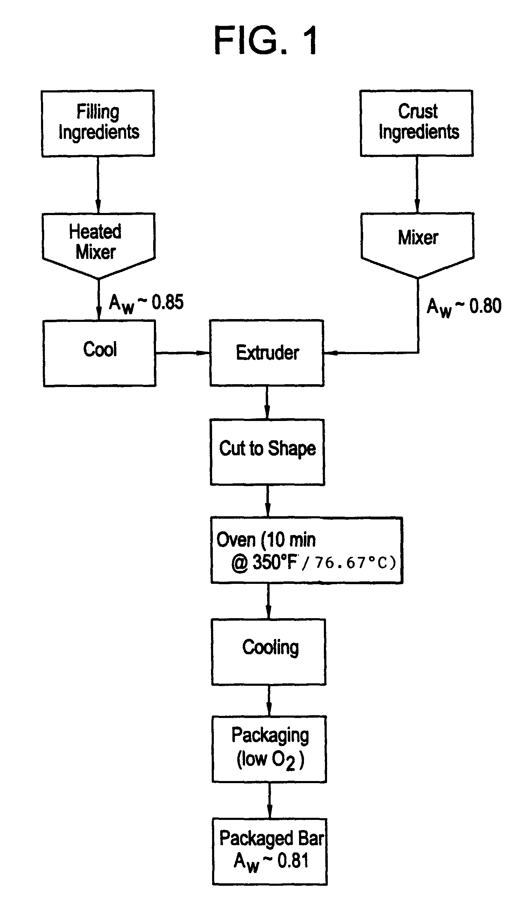

A process for preparing the cheesecake products of the present invention is illustrated in Figure 1. Ingredients making up the cheesecake filling are heated to approximately 200°F (93.3°C) in a heated mixer (e.g., heated scraped surface mixer) for a time sufficient to set the cheesecake filling (i.e., generally about 7 to about 12 minutes). The setting process allows the filling to maintain its structure through the baking step. The filling is then cooled to ambient temperature, at which time the filling has a value of a_{w} of about 0.76 to about 0.86. As an adjunct or supplement to the setting process, the filling may be aerated or foamed with an inert gas, provided this does not detrimentally affect the structure of the product through the baking step described below. The cheesecake dough ingredients are mixed with a low energy mixer (e.g., Hobart mixer). The dough preferably has an a_{w} of about 0.70 to about 0.86.

Subsequently, the dough and the filling are combined using any sheeting, encrusting, mold injection, or comparable method, to form a desired shape, such as a bar whose cross section is suitable for an individual serving. In general, the ratio of crust to filling may be about 10:90 to about 30:70 by weight. The combined composition, including the cheesecake filling and the dough, is baked in a conventional fashion for a short period of time (i.e., about 7 to 12 minutes) at a temperature of about 300 to about 450°F (148.89 to 232.22°C). Preferably, a zone oven is used. The individual bars or other shapes may be cut prior to or after the baking step. After baking, the product is cooled, preferably in a tunnel-type cooling unit, and then packaged. Preferably, packaging is carried out under an inert atmosphere (e.g., a nitrogen/CO₂ flush) in order to reduce the oxygen levels within the packaging. Preferably, the finished packaged product contains less than about 1 percent oxygen.

In general, overall water activity values of the cheesecake product may range from about 0.60 to about 0.90, preferably about 0.70 to about 0.85, and most preferably about 0.75 to about 0.80. When the value of a_{w} is greater than about 0.75, the crust may be aerated using leavening agents, or alternatively, a cracked, rough-textured crust can be formed. Such a crust helps accommodate the moisture present and prevents the crust from becoming soggy. Alternatively, an open top configuration, with the cheesecake filling exposed on the top surface, may be employed. Icing may be used to completely or partially cover the top surface of the cheesecake product.

In a preferred embodiment, the cheesecake product is formed into single serving bars. Generally such bars are rectangular in shape and are about 2 to about 3.5 inches (about 5.08 to about 8.89 cm) long, about 1.5 to about 2.3 inches (about 3.81 to about 5.84 cm) wide, and about 0.25 to about 1 inch (about 0.64 to about 2.54 cm) thick. Of course, other dimensions can be used. Figures 2A and 2B illustrate particularly preferred cheesecake bars of this invention. Figure 2A illustrates a cheesecake bar 10 having filling 12 resting on crust 14. The crust 14 extends past the filling material 12 to form a lip 16 which allows the bar to be picked up with the fingers without contacting the filling. Optionally icing 18 can be applied over the top of the filling 12. Figure 2B illustrates a similar bar 10 having a groove or depression 20 on the top surface of the filling 12. The groove or depression 20 can be filled with a suitable fruit or other stuffing. As those skilled in the art will realize, other configurations or shapes for the cheesecake products of this invention can be used as well.

The following examples are intended to further describe and illustrate the invention and not to limit it. Unless noted otherwise, all percentages and ratios are by weight.

### EXAMPLES

**Comparative Example**. A conventional New York style cheesecake was prepared using cream cheese, sugar, whole eggs, Graham cracker crumbs, butter, and vanilla. The baked product (full size 8-9 inch [20.32 to 22.86 cm] cake) has the properties shown in Table 1.

**Table 1**

| | |
|---|---|
| Moisture | 43% |
| a_{w} | 0.85-0.90 |
| pH | 5.0-5.2 |
| Fat content | 25% |
| Refrigerated shelf life | 10-14 days |
| Texture | 150-250 pascals |

**Example 1**. Cheesecake bars are prepared using the following ingredients: Cream cheese, sugar, hydrogenated shortening, cream cheese powder, glycerin, modified starch, whole egg powder, egg white powder, natural and artificial flavors, potassium sorbate, sweeteners, Polysorbate 80, bleached cake flour, high fructose corn syrup, Graham flour, molasses, honey, non fat dry milk, salt, ammonium bicarbonate, and caramel color. The ingredients and their amounts are approximately the same as given in Example 2, Table 3.

Inclusion of modified starch, glycerin, and shortening contributed to providing a creamy cheesecake texture. The crust resembles a high moisture cookie dough rather than a crumb crust. It acts as a support structure during baking, and during storage gradually acquires moisture from the cheesecake filling to become more like a crust while not becoming soggy. The characterization of this cheesecake product is provided in Table 2.

**Table 2**

| | |
|---|---|
| Moisture | 22.0 to 24.8% |
| a_{w} | 0.78 to 0.80 |
| pH | ∼5.5-6.0 |
| Fat content | 25% |
| Refrigerated shelf life | 120 days |
| Texture | 350-450 pascals |

As compared to conventional cheesecake properties (i.e., comparative example above), the shelf life has been increased at least by a factor of about 8.5 to 10.

**Example 2**. A cheesecake product is prepared with the ingredients shown in Table 3.

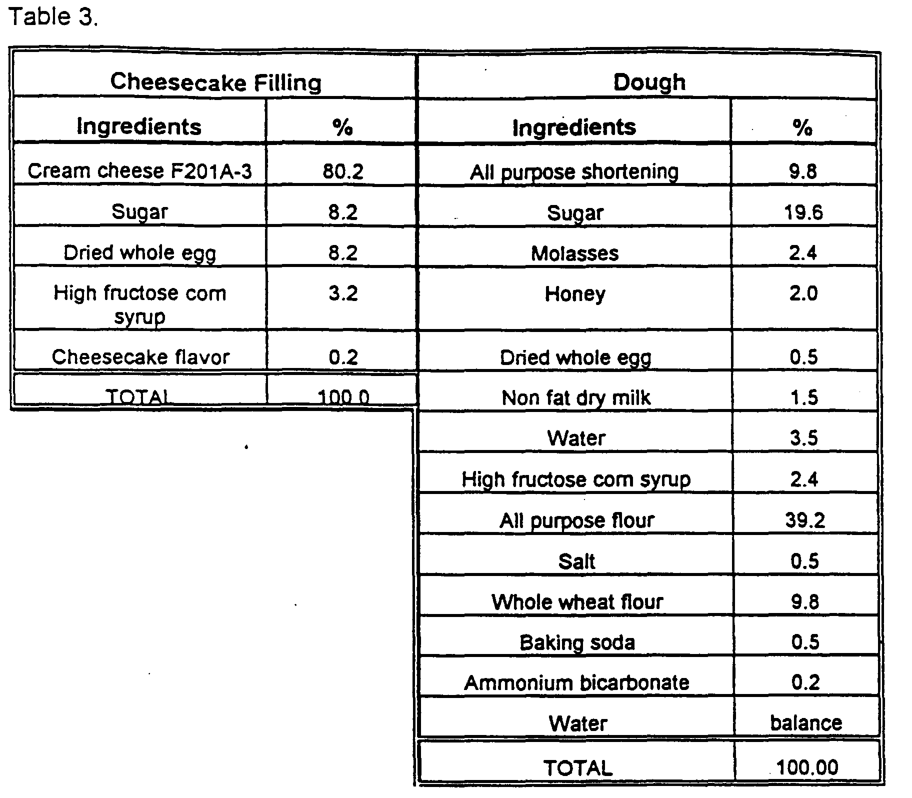

The filling was prepared using the following method. The cream cheese and sugar were mixed at low speed for about 1 minute. Shortening was added and the mixing continued for an additional 1-2 minutes. High fructose corn syrup and flavors were added with an additional minute of mixing. The remaining ingredients are then added with an additional 2 minutes of mixing. The dough was prepared using the following method. Shotening and sugar were mixed in a chilled bowl for about 2 minutes using a low speed mixer. Liquid ingredients (i.e., molasses, honey, high fructose corn syrup, colorant), whole egg powder, non-fat dried milk, and cold water (about 45-55°F [about 7.22 to about 12.78°C]) were added and mixed using a low speed mixer. The remaining ingredients were then added and mixed using a low speed mixer.
Additional water can be added to obtain desired tackiness and consistency. After preparation, the dough mix should be allowed to sit for about 30 minutes.

The following results were obtained:

| | **Water activity (a**_{**w**}**)** | |
|---|---|---|
| | **Unbaked** | **Baked** |
| Filling | 0.75 to 0.92 | 0.75 to 0.86 |
| Crust | 0.65 to 0.85 | 0.60 to 0.75 |
| Product | 0.8 to 0.85 | 0.78 to 0.80 |

**Example 3. Cheesecake dough**. Three experiments were done to optimize a cheesecake dough. The ingredients and results are shown in Table 4. The dough was prepared essentially as described in Example 2.

**Table 4**

| **Cheesecake dough:** | | | |
|---|---|---|---|
| **Ingredient** | **Experiment 1 (%)** | **Experiment 2 (%)** | **Experiment 3 (%)** |
| Partially hydrogenated soybean oil | 10.43 | 11.72 | 10.83 |
| Sugar | 17.21 | 19.53 | 18.93 |
| Molasses | 3.13 | 1.46 | 1.56 |
| Honey | 1.56 | 0.98 | 1.07 |
| Caramel color | - | - | 0.21 |
| Glycerin | - | 0.98 | - |
| Dried whole eggs | 0.26 | 0.49 | 0.54 |
| Non fat dry milk | 1.57 | 1.46 | 1.66 |
| Water | 3.65 | 3.52 | 3.81 |
| High fructose corn syrup | 2.61 | 2.44 | 2.73 |
| Cake flour | - | 39.06 | 45.37 |
| All purpose flour | 46.92 | - | - |
| Graham flour | - | 9.77 | 2.44 |
| Whole wheat flour | 5.21 | - | - |
| Baking soda | 0.52 | 0.88 | - |
| Ammonium bicarbonate | 0.52 | 0.24 | 0.27 |
| Salt | 0.52 | 0.49 | 0.55 |
| Calcium propionate | - | - | 0.27 |
| Water | 5.89 | 6.98 | 9.76 |
| TOTAL | 100.00 | 100.00 | 100.00 |

The results are shown in the following table:

| | **Experiment 1** | **Experiment 2** | **Experiment 3** |
|---|---|---|---|
| a_{w} | 0.40-0.45 | 0.56 | 0.58 |
| Characteristics | Some cracking, severe spreading | Good texture, slightly sticky dough, low spreading | No spreading, golden brown color, open texture, retards migration |

Experiment 1 is an example of an early investigation in which characteristics that permit either sheeting of the dough or its extrusion are studied. It is seen that the resulting characteristics are not optimal. Experiment 2 focuses on a dough that may be extruded. It is found that by increasing the water activity, moisture migration between the filling and the dough is minimized, and that spreading and cracking are well controlled. In Experiment 3, the dough is optimized for the cheesecake product including the cheesecake filling, providing a pleasant background flavor and permitting the final a_{w} of the finished product to be in the range 0.78-0.80 after equilibration.

**Example 4. Cheesecake filling**. Experiments were done to optimize a cheesecake filling. The ingredients are shown in Table 5. The procedure to prepare the filling was essentially as described in Example 2.

**Table 5**

| **Cheesecake filling** | | | |
|---|---|---|---|
| **Ingredient** | **Experiment 1 (%)** | **Experiment 2 (%)** | **Experiment 3 (%)** |
| Cream cheese | 41.86 | 56.43 | 43.79 |
| HYMO shortening | - | - | 10.96 |
| Vegetable shortening | - | 8.06 | - |
| Coconut oil | 15.13 | - | - |
| Dried whole egg powder | - | 6.45 | 1.59 |
| Dried egg white powder | - | - | 1.10 |
| Dried cream powder | - | - | 9.57 |
| Non fat dry milk | 10.09 | - | - |
| Glycerin | - | 6.05 | 7.57 |
| Citric acid | - | 0.24 | 0.60 |
| Dextrose | 10.09 | - | - |
| Sugar | - | 22.17 | 19.23 |
| Powdered sugar 10x | 8.83 | - | - |
| Corn syrup solids | 8.82 | - | - |
| Whey powder | 4.03 | - | - |
| Salt | 0.50 | - | - |
| Xanthan gum | 0.40 | - | - |
| Vanilla | 0.25 | - | 0.40 |
| Sour cream flavor | - | - | 0.30 |
| Cheesecake flavor | - | 0.60 | - |
| Ultra Sperse starch | - | - | 3.79 |
| N Lite LP | - | - | - |
| Potassium sorbate | - | - | 0.10 |

The results are shown in the table below:

| | **Experiment 1** | **Experiment 2** | **Experiment 3** |
|---|---|---|---|
| a_{w} | ∼0.74 | ∼0.857 | ∼0.79 |
| Characteristics | Dry, hard product; grainy texture; suboptimal mouthfeel | Good flavor and appearance; stable for about 42 days | Flavor, texture, and appearance close to conventional cheesecake; stable > 120 days |

In Experiment 1 the question of baking vs. not baking was examined. It was found that omitting baking does not provide the opportunity to bake off moisture. The type of oil to be used was also examined. It was concluded that coconut oil, low melting point vegetable shortening, and 110-112°F (43.33 to 44.44°C) vegetable oil will not work because they provide sub-optimal texture. Use of corn syrup solids provided a lower water activity, but resulted in a hard, dry texture. In Experiment 2 a softer product with better flavor than in Experiment 1 was obtained, but the use of whole egg resulted in a custard-like texture. Mold and yeast were observed within 6 weeks of refrigerated shelf storage. In Experiment 3, the filling was highly acceptable. There were no off flavors, and the use of egg whites and starches appears recommended.

Combining the results of Examples 4 and 5, an optimal cheesecake product of the instant invention may be obtained by employing the formulations of Experiments 3 in each of Table 4 (dough) and Table 5 (filling), in a proportion of dough to filling of about 20:80. With this formulation, the overall water activity for the finished product is the range 0.78 to 0.80.

**Example 5**. A cheesecake filling was prepared using the formulation presented in Table 6.

**Table 6**

| **Cheesecake filling** | |
|---|---|
| **Ingredients** | **%** |
| Cream cheese | 61.41 |
| Granulated sugar | 23.73 |
| Egg whites | 8.37 |
| Glycerine | 5.58 |
| Vanilla | 0.42 |
| Phosphoric acid | 0.21 |
| Emplex (modified food starch) | 0.14 |
| Potassium sorbate | 0.07 |
| All Whip (protein-based foam stabilizer) | 0.07 |

A cheesecake dough was prepared using the formulation presented in Table 7.

**Table 7**

| **Cheesecake Dough** | |
|---|---|
| **Ingredients** | **%** |
| Vanilla Wafers | 16.70 |
| Brown sugar | 16.16 |
| Flour | 26.45 |
| Applesauce | 10.29 |
| Margarine | 15.00 |
| Eggs | 8.27 |
| Granulated sugar | 6.58 |
| Baking soda | 0.11 |
| Vanilla | 0.05 |
| Salt | 0.21 |
| Calcium propionate | 0.18 |
| TOTAL | 100.00 |

The ingredients for the cheesecake filling were added to a mixing kettle, heated to 200°F (93.33°C) and mixed for 45 min. The mixture was then placed in a refrigerator to cool overnight. The value of a_{w} was 0.855 after cooling overnight. The dough ingredients were mixed for 2 min. at low speed and then for 1 min at high speed; the value of a_{w} for the dough measured at this point was 0.80.

The cheesecake filling and the dough were coextruded in an APV coextruder (APB Baker Corp., Chicago, II.) to form rectangular bar shapes (about 4 in (10.16cm) x about 1.5 in (3.81cm) x about 0.75 in (1.91cm) at a ratio of crust to filling of approximately 20:80. The bars were then baked using an Enersyst Impinger oven for 10 min at 350°F (176.67°C), allowed to cool to about 75°F (23.89°C), and then packaged using conventional film material.

This product was stored for 5 months under refrigerated conditions (about 35-45°F [1.67 to 7.22°C]) and maintained good flavor and stability against microbiological contamination.

## Claims

1. A low moisture cheesecake product having extended shelf life stability comprising a crust and a cheesecake filling, wherein
the water activity of the crust ranges from about 0.40 to about 0.86,
the water activity of the cheesecake filling ranges from about 0.60 to about 0.86,
the water activity of the cheesecake product ranges from about 0.60 to about 0.86, and
the proportion of the crust to the cheesecake filling ranges from about 10:90 by weight to about 30:70 by weight.

2. A cheesecake product according to claim 1, wherein the water activity of the crust is about 0.5 to about 0.8.

3. A cheesecake product according to claim 1 or claim 2, wherein the water activity of the filling is about 0.7 to about 0.85.

4. A cheesecake product according to any of claims 1 to 3, wherein the water activity of the cheesecake product is about 0.7 to about 0.82.

5. A cheesecake product according to any one of claims 1 to 4, wherein the cheesecake product is a bar about 2.0 to about 3.5 inches (about 5.08 to about 8.89 cm) long, about 1.5 to about 2.3 inches (about 3.81 to about 5.84 cm) wide, and about 0.25 to about 1 inch (about 0.64 to about 2.54 cm) thick.

6. A cheesecake product according to claim 5 , wherein the crust covers the bottom of the bar and extends past the filling to provide a lip.

7. A cheesecake product according to any one of claims 1 to 6, wherein the water activity of the crust is about 0.60 to about 0.70; wherein the water activity of the filling is about 0.75 to about 0.80; wherein the water activity of the cheesecake product is about 0.70 to about 0.82; and wherein the cheesecake product is a bar about 2.0 to about 3.5 inches (5.08 to 8.89cm) long, about 1.5 to about 2.3 inches (3.81 to 5.84cm) wide, and about 0.25 to about 1 inch (0.64 to 2.54cm) thick.

8. A cheesecake product according to any of claims 1 to 7, further comprising a flavoured cheesecake stuffing wherein the water activity of the stuffing is less than the water activity of the cheesecake filling.

9. A cheesecake product according to any of claims 1 to 8, wherein the cheesecake product has a shelf life stability of at least about 3 months at refrigerated temperature.

10. A cheesecake product according to any of claims 1 to 9, wherein the cheesecake filling comprises less than about 60% by weight cream cheese.

11. A cheesecake product according to any of claims 1 to 10, further comprising at least one ingredient that contributes to a lowering of the water activity of the cheesecake product.

12. A cheesecake product according to claim 11, wherein the one or more ingredients that contribute to a lowering of the water activity are selected from the group consisting of dried sweet cream powder, starches, polyhydric alcohols, sugar alcohols, shortenings, fats, and emulsifiers.
